# EUROPEAN PATENT APPLICATION

(11) **EP 1 195 614 A1**
(43) Date of publication of application: **10.04.2002**
(21) Application number: 99923908.0
(22) Date of filing: 04.06.1999
(51) Int. Cl.: G01S 5/14, H04B 7/26, G01C 21/00

(54) **POSITIONING DEVICE USING CELLULAR COMMUNICATION**

(71) Applicant: Hitachi, Ltd., Chiyoda-ku, Tokyo 101-8010 (JP)
(72) Inventor: KUWAHARA, Mikio, Centr. Res. Lab., Hitachi, Ltd., Kokubunji-shi, Tokyo 185-8601 (JP); DOI, Nobukazu, Centr. Res. Lab., Hitachi, Ltd., Kokubunji-shi, Tokyo 185-8601 (JP); ISHIFUJI, Tomoaki, Centr. Res. Lab., Hitachi, Ltd., okubunji-shi, Tokyo 185-8601 (JP)
(74) Representative: Beetz & Partner Patentanwälte
(86) International application number: JP9902996
(87) International publication number: WO0075684

(57) **Abstract**

A specific signal transmitted by a base station of a cellular system is received by a handset and positioning is performed at the handset based on the base station information stored in the handset.

In more practical, a memory 6 is provided in the handset 1 to store position of the base station and transmission timing information of the specific signal. The timing of a receiving signal of at least three stations is detected and self position is estimated based on the shift from the transmission timing information of the base station.

Deterioration in operation life of the battery of the handset can be prevented by controlling the transmission which requires large power consumption at the handset.

## Description

### Technical Field

The present invention relates to an apparatus for detecting positions of handsets in a cellular communication.

### Background Art

U.S. FCC has issued a recommendation for position detection in a radio communication. In Japan, a method of detecting positions by utilizing PHS has been put into practice.

In regard to the more accurate position detection method such as navigation and guide service or the like, U.S. Patent No. 5,841,396 discloses a DGPS technique in which receiving information of a GPS is transmitted using the cellular communication.

As the other positioning technique, there is provided a method for estimating a position of a handset from a field strength, an incident direction or a delay time of a signal transmitted from the handset in a base station.

Moreover, in another method, the handset extracts characteristics of a measured signal and sends it to a location server and thereby the sever can identifies the position of the handset.

### Disclosure of Invention

The positioning method using a DGPS requires to further add a GPS receiver and a signal processing unit to a handset of a cellular communication. Moreover, since a receiving signal of the GPS is very weak, a positioning served area is limited and it is difficult to execute positioning for the cellular communication handset within the weak field strength areas such as an indoor area of a house or a vehicle.

Next, the methods explained above for receiving a transmitting signal from the handset in a base station has a problem that power consumption of the handset becomes large on the occasion of continuous positioning and battery life of the handset is shortened. Moreover, in order to improve positioning accuracy, it is required for many base stations to observe the handsets. However, in this case, it is a matter of course to simultaneously use many base station resources and therefore here rises a problem that running cost increases and the method cannot easily be applied to a current system.

Therefore, investigation has been made for the positioning method by a cellular system in which each base station transmits a pulse signal with an identical constant time interval and information for identifying a relevant base station and a signal indicating a phase relationship with the pulse signal from adjacent base stations are transmitted by each broadcast channel.

As a result, it has been proved that the problems explained above can be overcome by comprising memory means with which the handset can store code sequences or transmission timings of signals transmitted by the plural base stations and latitude and longitude of these base stations, delay estimation means for collating reception timing of signals from the plural base stations positioned with the signal transmission timing of the plural base stations stored in the memory means or estimating a transmission source base station of a received signal from collation of the code sequence and also an estimating propagation delay from difference between the transmission timing and a reception timing of the estimated base station and position estimation means for estimating handset position based on the propagation delay estimated for at least three or more base stations.

### Brief Description of Drawings

Fig. 1 illustrates a structure of a first embodiment of the present invention;
Fig. 2 is a diagram for explaining generation of a time delay between transmission timing and reception timing;
Fig. 3 is a diagram illustrating a structure of a second embodiment of the present invention;
Fig. 4 is a diagram illustrating a structure of a third embodiment of the present invention;
Fig. 5 is a diagram illustrating a structure of a fourth embodiment of the present invention; and
Fig. 6 is a diagram illustrating a structure of a fifth embodiment of the present invention.

### Best Mode for Carrying Out the Invention

The preferred embodiments of the present invention will then be explained below with reference to the accompanying drawings.

Numerals in the drawings indicate as follows:
1, a hand set; 2, an RF unit; 3, an IF unit; 4, a despread unit; 5, a digital signal processor (DSP); 6, a memory for storing information on base stations; 11, 12, 13, cellular base stations; 21, a peak from a despread unit in a case of a reception just under a base station antenna; 22, a peak from a despread unit in a case of a reception away from a base station antenna; 30, an information server; 31, a memory in an information server; 32, a memory in a base station; 40, a measuring station; 41, an RF unit of a measuring station; 42, an IF unit of a measuring station; and 43, a despread unit; 44, a signal processing unit of a measuring station.

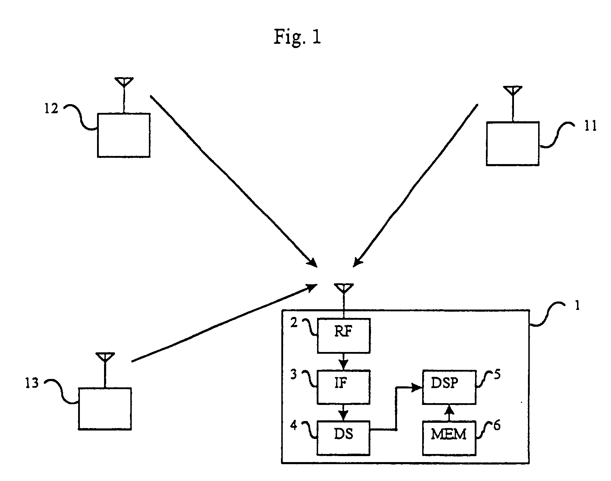

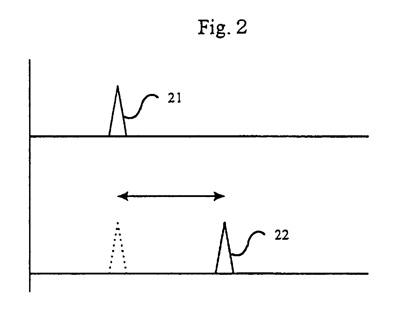

Fig. 1 illustrates the first embodiment of the present invention. Fig. 2 is a diagram illustrating the concept in which the absolute time delay is generated in received signals depending on the distance between a handset and a base station in the first embodiment. A signal which is band-spreaded by the spread code will be explained below as an example.

In Fig. 1, specific signals are respectively transmitted from three base stations (11, 12, 13). The arrow marks from the base stations indicate that the radio signal is being received by the handset. At a handset 1, the signal received by an antenna is amplified by an RF unit 2 and is thereafter down-converted by an IF unit 3 to be converted to a digital base band signal. Thereafter, path finding is performed from the correlation detection with a specific code sequence in a despread unit 4 and a digital signal processor (DSP) 5 detects reception timing of the signal. In this timing, basically, an information to discriminate the relevant base station is transmitted from the base station nearest to the handset 1. The code sequence, transmission timing, latitude and longitude information of the transmitting base station transmitted from each base station are previously stored in a memory 6. Using such information, the DSP 5 executes path search of the reception timing. Use of such information is effective for shortening a path finding time of the receiving signal. In Fig. 2, the upper diagram indicates an output of the despread unit 4 when the handset is placed just under the base station antenna and a peak 21 is observed at only one point in this diagram. The lower diagram indicates an output of the despread unit 4 when the base station is away from the handset by a certain distance and the peak 22 is detected in this diagram at the position deviated from the peak 21. Here, it is assumed to simplify the explanation that there is no multi-path. Difference of propagation distances can be calculated back from the amount of phase shift between the peaks 21, 22. When distance from a couple of base stations which positions are already identified is detected, it is possible to estimate the position of the handset.

In general, various paths can be found from the multi-path. However, the path having the highest reception timing (earliest timing on the time axis) can be estimated as the path for the propagation of shortest distance. Therefore, this is defined as the shortest reception timing. Since the timing for signal transmission is stored in the memory 6, a pseudo delay or a pseudo propagation distance from each base station can be detected from a difference between the measured result and transmission time. Since a real time of the base stations is unknown in the handset, respective results of measurement are relative data. When the real time of base stations is known in the handset, the "real propagation distance" from at least two base stations can be detected. Therefore, a couple of estimated values of the two-dimensional positions (latitude, longitude) of the handset can be assumed from the known latitude and longitude information and real propagation distance of base station. Between these two estimated values, the value approximated to the preceding positioning data is estimated as the current own position. Moreover, even if the real time is unknown, it is also possible to estimate the two-dimensional position and real time from the "pseudo distance" of at least three base stations. Namely, when positions of three base stations, difference between transmission timings and difference between reception timing can be detected, self-position can be uniquely defined. It is proved from the mathematical view point and this method is identical to that used for a GPS. Therefore, detail explanation will be neglected here.

In the present invention, positioning of the handset by itself becomes possible by storing the base station information required for positioning in the memory 6 of the handset 1. Therefore, the number of times of transmission of signal can be saved in comparison with the method of the related art in which the positioning result has to be transmitted to the base station. Moreover, since reduction in number of times of transmission is related to reduction in power consumption, operation life of the battery in the handset can be elongated. Moreover, when positioning is performed continuously, continuous access to server or the like is unnecessary. In addition, the other system such as GPS or the like is also unnecessary in the present invention. Therefore, the hardware which is required for the other systems is not required and it is effective for reduction in size of the handset, saving of power consumption and reduction in cost of the handset, etc.

In the first embodiment, the spectral spread signal by the spread code is explained as an example. However, if it is possible to realize the principle that the reception timing of the code can be measured from correlation process between the transmitted code sequence and the code sequence stored previously in the memory 6, the multiple connection system or code system such as a TDMA, a CDMA or a QPSK or BPSK may be used. However, in the CDMA system, path resolution is high and high precision estimation is possible because the bandwidth of base band signal is generally wide. Moreover, resolution of multi-path is also high.

In the CDMA system represented by IS-95, since the synchronous detection is performed in the down line, a pilot signal is transmitted from the base station. The short code of this pilot signal is not modulated and does not transmit information and therefore it is convenient for positioning.

In addition, in this case, since the transmission output is higher than the individual channel, signal detection can also be done easily. Accordingly, the signals from many base stations can easily be catched simultaneously. From which base station the pilot symbol is received can be identified from the phase of long code. The transmission timing of the adjacent base stations is stored in the memory 6 of the handset 1. From comparison between the despread result of the received signal and the stored timing, the base station corresponding to such signal can be estimated. For example, it is possible to introduce the method of finding out the matching between the relative position of the received signal and the pattern which is stored previously in the memory, the method of finding out the base station in which the previously explained patterns are matched by narrowing the estimation range considering the accuracy of clock previously in the handset or the method of finding out the nearest base station from the information broadcasted from the base station. In this embodiment, the pilot signal is explained as an example, but a transmitting signal may be used in a common control channel when contents of this transmitting signal are known.

In the present invention, the signals from three or more base stations may be used. For instance, when it is possible to observe the six base stations, position of the handset used in each set can be estimated by using two sets of independent three stations. In this case, since one estimated position may be obtained in each set, two points in total can be estimated. Here, independent station means that errors of two points in the handset position obtained from each set of base stations is mutually independent from the viewpoint of probability. Therefore, an error can be reduced statistically and the positioning accuracy can also be improved by obtaining the average of two points. In the same manner, when the 3N base stations can be observed, an independent estimation result of N points can be obtained and therefore statistic accuracy may be improved in proportion to the square root of N. The CDMA system represented by IS-95 is capable of outputting the pilot signal in the power higher than the other individual channels. Therefore, the handset can observe the three or more base stations simultaneously. Accordingly, the positioning accuracy may effectively be improved by the spatial averaging explained above.

In this embodiment, the path resulting in the highest reception timing detected by measuring the impulse response of the propagation path can be estimated as the shortest path. By the way, fading ordinarily occurs in the propagation path in the mobile communication. This fact indicates that an error factor is independent when measurement is conducted with a time interval. Therefore, like the above-mentioned spatial averaging operation, the positioning error can be saved by the averaging operation. Therefore, the positioning accuracy can further be improved by conducting the measurements for several times and then processing the result as the independent measurement results.

One measurement result estimated from the 3N reception results may also be obtained by the method of selecting the point where the mean square error of N points becomes minimum. In this method, the number of times of calculation will be increased but the positioning accuracy can further be improved. Thereby, the problem can be solved.

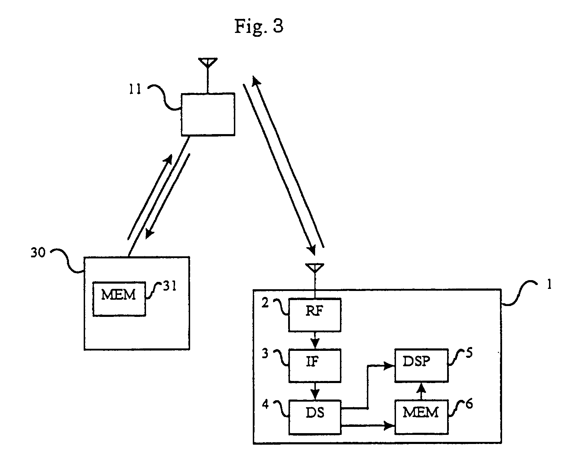

The second embodiment will then be explained with reference to Fig. 3.

In the first embodiment, the code sequence, transmission timing and latitude and longitude information of the adjacent base stations are stored in the memory of the handset. However, these parameters are probably changed in some cases for the convenience of running. Moreover, a large memory capacity is required to store the base station information of all over the country. Therefore, information is updated periodically or as required using the cellular. Thereby, a user is never requested to change the handset by purchasing. Moreover, it is enough to store only the information of base stations within the limited area around the handset, thereby memory capacity may be reduced.

In Fig. 3, information of each base station is stored in a memory 31 of an information server 30. Each handset makes access to the server via the cellular base station 11 to extract the information within the memory 31. The extracted information is transferred to the handset by radio via the cellular base station 11. The handset reproduces this signal, stores the information within the own memory 6 to use this information for the positioning. With the processes explained above, each handset can update periodically the information or minimize the updating of information and thereby the handset can save the power consumption. Moreover, the handset can realize the positioning with the latest information stored in the memory and thereby the positioning accuracy is not susceptible to be deteriorated.

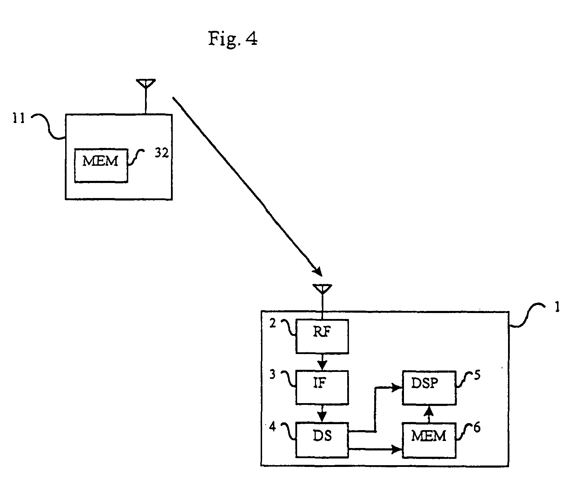

The third embodiment will then be explained with reference to Fig. 4.

In the second embodiment, the handset has issued information request to update the information. However, in the third embodiment, the latest information is stored in the base station 11 and it is broadcasted using a broadcast channel. In this case, since the handset does not have to transmit the information request, power consumption of the handset can be saved. The handset observes the broadcast channel and updates the contents of own memory 6 periodically or as required.

In Fig. 4, the base station 11 is provided with a memory 32 for storing the information required for the positioning. The information required for the positioning is the code information (code, timing) and positioning information (latitude, longitude) of the base station. This information is transmitted through the broadcast channel. Upon detection that the information has been updated or detection that the handset has moved to the other cell or detection that power switch is turned ON or just before starting positioning, the handset stores the information required for the positioning to the memory 6. When it is requested to obtain such information by charging, it is possible that the information is scrambled and the method for descrambling the information is offered with a certain charge.

It is inconvenient for user if only the latitude and longitude can be obtained as the result of measurement. Therefore, a map information in the periphery of base station is also transmitted using the broadcast channel. The handset displays, on this map information, the point obtained from the latitude and longitude information of the result of measurement. Thereby, the handset is required only to provide at least map storing means and thereby handset may be reduced in size and weight.

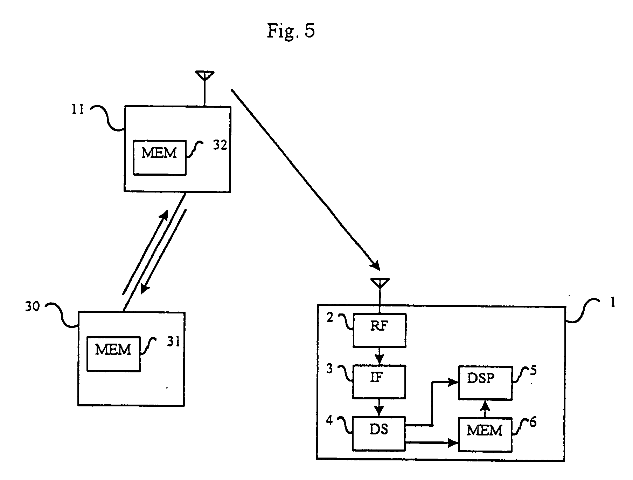

The fourth embodiment will then be explained with reference to Fig. 5.

The third embodiment includes a certain troublesome manipulations in update of information in each base station. Therefore, a server 30 which is common for a plurality of base stations is provided and information is stored within the inside memory 31. Information can be updated at a time by the server 30. The base station 11 makes access periodically to the server to update the information stored in the memory 32.

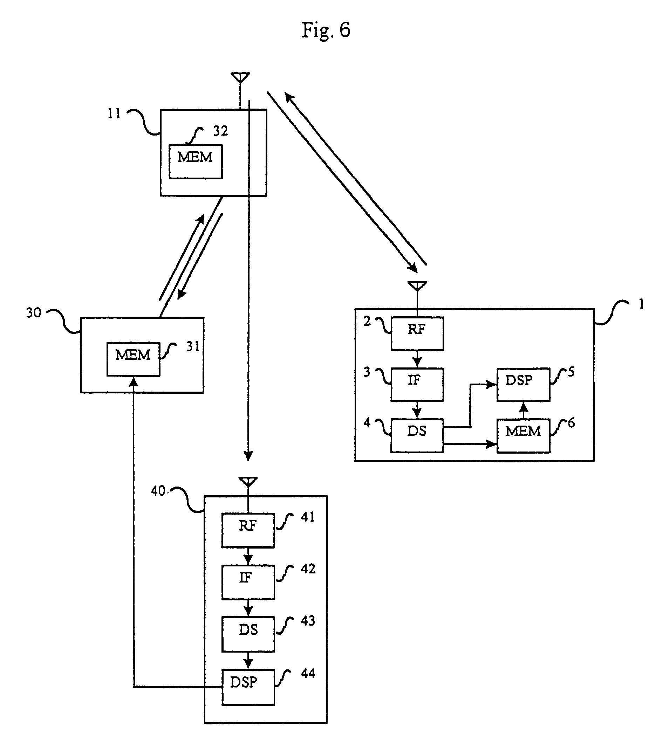

The fifth embodiment will then be explained with reference to Fig. 6.

The base station is a stationary station and almost does not change the transmission timing for the reference time. However, there are cases where the actual transmission timing of the signal from an antenna is a little deviated because of the signal delay in the cable and filter. In order to improve the positioning accuracy, difference between the time for transmission and the actual transmission time must be detected and then it should be compensated.

In Fig. 6, a measuring station 40 is installed like a base station in the area assuring wider view such as the roof floor of a building. Latitude and longitude of the stationary measuring station can be measured precisely. The measuring station observes the signals of adjacent base stations. The measuring station 40 is provided, like the handset, with an RF unit 41, an IF unit 42, a despread unit 43 and a signal processing unit 44. The measuring station 40 extracts the reception timing of respective base station from the despread result and calculates the timing of the actual signal transmission from the antenna based on the known distance between a certain base station and measuring station. The obtained transmission timing result is transferred to the server 30. The server 30 stores the compensated data in the memory 31. The handset 1 makes access, as required, to the server 30 via the cellular for the purpose of positioning using the compensated data obtained.

This embodiment can also be applied to the mode illustrated in Fig. 5.

The sixth embodiment will be explained. Since various multi-paths occur in the office areas in the central part of cities, the positioning accuracy may be deteriorated. On the other hand, characteristic artificial structures are increasing, and therefore estimated positioning accuracy can be improved by identifying an artificial structure through the simplified question. The handset is generally provided with the display system such as liquid crystal or the like and key pad. The particular structure and shape in the relevant region are displayed by the display system and the estimated accuracy can also be improved by giving the answer from the handset user. The display system issues visual questions such as "Can you find a characteristic building A in front of you?" or "Can you find the restaurant B in your right side?", etc. and thereby the positioning accuracy can be improved from the result of answer. Moreover, if the positioning is impossible, the handset displays, for example, "Please move 20 m along the road" or the like. Thereby, the positioning accuracy can also be improved by avoiding the out of service area via radio wave. The question is the information linked with the map and it is simultaneously downloaded when the handset downloads the map information.

In embodiments listed above, the antenna of the handset is assumed not to have antenna diversity for the convenience of explanation. For the diversity reception, the receiving signal of respective antennas is independent and therefore it is enough to estimate the distance between the base station and handset using the path which has received the signal first among all paths exceeding the diversity branch. Influence of multi-path fading is independent for each antenna and therefore probability for reception of the shortest path can be improved and estimation accuracy can also be improved.

In the cellular communication environment, fading is occurring due to the movement of the handset and change of ambient environment. Therefore, it is sometimes difficult, depending on the region or positioning time, to always catch three or more base stations. In the case where plural times of positioning are conducted continuously, the real time can be estimated in the handset by the preceding positioning operation. Even in case the clocking accuracy of the handset is not good, when the time interval between the preceding positioning and the current positioning is sufficiently short, the time of the handset can be calibrated with the time estimated at the time of preceding positioning and the approximate value of real time can also be estimated in the handset. Therefore, when at least two base stations can be catched, the positioning operation can be conducted. For this purpose, the handset has time measurement means and when three or more base stations can be captured in the preceding positioning, the handset position and real time can be estimated and the means for time measurement is calibrated from the estimated real time. If only two base stations are catched in the next positioning and a product of the accuracy of the time measurement means and time interval of current measurement is smaller than the product of the required positioning accuracy and velocity of light, it is considered that accuracy of the time measurement means in the handset is sufficient and the time measurement means is used for positioning operation.

According to the present invention, it is possible to estimate the handset position with excellent accuracy from the signal transmitted by the cellular base station even without use of the other system which requires additional circuit such as the GPS. Moreover, the handset transmits a less amount of signals via radio wave and thereby power consumption can be saved even in the case of the continuous positioning. Since the power consumption is rather small, the present invention can be applied to navigation and guide. Since positioning is performed by the handset, the base station resource is never used and the present invention can easily be applied to the current system.

## Claims

1. A positioning apparatus, comprising:
memory means for storing code sequences, transmission timings of signals transmitted by a plurality of base stations introducing a cellular system and latitude and longitude of the plurality of base stations;
delay estimation means for estimating a transmission source base station of a received signal through collation of reception timings or reception code sequences of the signals transmitted by the plurality of base stations and the transmission timings or the code sequences of the signals of the plurality of base stations stored in the memory means and also estimating propagation delay from difference between the transmission timing and reception timing of the estimated transmission source base station; and
position estimation means for estimating self-position from pseudo delays obtained for at least three or more base stations by the delay estimation means.

2. A positioning apparatus according to claim 1, wherein the cellular system introduces a CDMA communication.

3. A positioning apparatus according to claims 1 or 2, wherein the delay estimation means uses common control channels or reception timings or code sequences of common pilot signals of the plurality of base stations.

4. A positioning apparatus according to any one of claims 1-3, wherein the position estimation means obtains a plurality of position estimation points obtained by using desired three base stations among the plurality of base stations to define an average position as an estimation result.

5. A positioning apparatus according to any one of claims 1-4, wherein the position estimation means obtains a plurality of points of position estimation points obtained by receiving for a plurality of times with an time interval the signals transmitted by the plurality of base stations and defines an average position as an estimation result.

6. A positioning apparatus according to claims 4 or 5, wherein the position estimation means defines a position where mean square error of a plurality of the pseudo delays obtained becomes minimum as an estimation result.

7. A positioning apparatus according to any one of claims 1-6, wherein the signals transmitted by the plurality of base stations, the transmission timings thereof and the latitude and longitude information of the plurality of base stations which are mentioned in the memory means, or map information in the periphery of the plurality of base stations are obtained from memory means of a server via communication in the cellular system.

8. A positioning apparatus according to any one of claims 1-6, wherein the memory means stores latitude and longitude information, code sequence information of transmitted signals and transmission timings thereof which are transmitted through a broadcast channel of a common control channel of at least one base station among the plurality of base stations and are of its own station and its adjacent stations.

9. A positioning apparatus according to claim 8, wherein the memory means stores map information of its own station and its periphery transmitted through the broadcast channel of the common control channel of the at least one base station among the plurality of base stations.

10. A positioning apparatus according to any one of claims 1-9, further comprising display means for displaying the map information stored in the memory means and an estimated position obtained by the position estimation means.

11. A positioning apparatus according to claim 10, further comprising a key pad, wherein self-position is estimated based on information obtained from a user via the key pad or the display means.

12. A positioning apparatus according to any one of claims 1-11, further comprising a plurality of antennas, wherein diversity reception is performed using the plural antennas and a distance between a base station and a handset is estimated by use of a path which has been received first among all paths estimated for a plurality of diversity branches.

13. A positioning apparatus according to any one of claims 1-12, further comprising time measurement means, wherein a real time is estimated at a time of preceding positioning and distances to two base stations are estimated with reference to the real time in order to estimate the self-position.

14. An error measuring apparatus comprising:
timing error measurement means for receiving transmitted signals of a plurality of base stations introducing a cellular system, measuring shifts of timings of received signals from reception timings and latitude and longitude of the plurality of base stations and latitude and longitude information of a measuring station and calculating difference to a scheduled time to be transmitted actually; and
server storing means for storing the compensating information based on a calculation result of the timing error measurement means.

15. An error measuring apparatus according to claim 14, wherein the compensating information is periodically transmitted to at least one base station among the plurality of base stations.

16. A positioning method comprising the steps of:
receiving specific three signals transmitted in every identical constant time interval from three base stations;
discriminating the base stations corresponding to the specific three signals; and
estimating self-position using position information of the discriminated three base stations and information of transmission timings of the specific three signals and reception timings of the specific three signals which are actually received.

17. A positioning method according to claim 16, further comprising a step of obtaining, through synchronization with one signal among the specific three signals, information for identifying a base station corresponding to the one signal and other two base stations transmitted by the base station and information about the transmission timings of the specific three signals.

18. A positioning method according to claims 16 or 17, wherein the position information of the three base stations is previously stored in a handset.
